# EUROPÄISCHE PATENTSCHRIFT

(11) **EP 0 332 830 B1**
(45) Veröffentlichungstag und Bekanntmachung des Hinweises auf die Patenterteilung: **24.03.1993**
(21) Anmeldenummer: 89101769.1
(22) Anmeldetag: 02.02.1989
(51) Int. Cl.: B60R 19/16, B60R 19/40

(54) **Aufprallvorrichtungssystem für Nutzfahrzeuge**
Bumber device for utility vehicles
Pare-chocs pour véhicules utilitaires

(30) Priorität: 16.03.1988 DE 3808812; 16.03.1988 DE 3808813
(43) Veröffentlichungstag der Anmeldung: 20.09.1989
(73) Patentinhaber: MAN Nutzfahrzeuge Aktiengesellschaft, 80976 München (DE)
(72) Erfinder: Schubert, Klaus, Dr., D-8000 München 60 (DE); Rieck, Gerhard, Dipl.-Ing., D-8000 München 60 (DE)

(56) Entgegenhaltungen:
- CH-A- 145 011
- FR-A- 2 194 170
- FR-A- 2 222 249
- FR-A- 2 383 047
- GB-A- 2 084 944
- US-A- 2 466 265
- US-A- 3 848 914
- US-A- 4 182 529

## Beschreibung

Die Erfindung bezieht sich auf ein Aufprallvorrichtungssystem an Nutzfahrzeugen, mit einer energieaufnehmenden Einrichtung in der Stoßstangenebene von Personenkraftwagen.

Beim Frontalzusammenstoß zwischen einem Nutzfahrzeug (Nfz) und einem Pkw sind die Risiken im hohen Maße ungleich verteilt. Wegen der ungleichen Massen-bzw. Energieverteilung ist das Risiko eines Pkw's bzw. Pkw-Insassen, bei einem Zusammenstoß mit einem Nfz zu Schaden zu kommen, ungleich größer als das des Nfz bzw. dessen Fahrers. Zusätzlich zu den Massenverhältnissen kommt das Problem der Fixierung des Pkw's beim Zusammenstoß mit dem Nfz, da besonders beim Pkw die Energieeinleitung in einer Höhe über der Fahrbahn geschieht, in der ein Pkw keine energieaufnehmende Struktur besitzt und damit vom Nfz überfahren bzw. überrollt werden kann.

Aus der FR-A-2 383 047 ist ein Aufprallvorrichtungssystem mit energieaufnehmender Struktur, das in der Ebene der Stoßstangen von Personenkraftwagen angeordnet ist, bekannt. Hier handelt es sich aber nur um eine energieverzehrende Einrichtung ohne seitliche Ableitungsfunktion, die in ihrer speziellen Ausführung des Pkw-Vorderteil unter sich einklemmt und so die Gefahr für die Pkw-Insassen eher vergrößert als verringert.

Der Erfindung liegt die Aufgabe zugrunde, ein Aufprallvorrichtungssystem der eingangs genannten Art so auszugestalten, daß das Risiko bei einem frontal auffahrenden Pkw deutlich verringert wird.

Die Aufgabe wird erfinungsgemäß durch die im Anspruch 1 gekennzeichneten Merkmale gelöst.

Mit dem erfindungsgemäßen Aufprallvorrichtungssystem wird bei einem Zusammenstoß ein Teil der Bewegungsenergie durch eine an sich bekannte energieaufnehmende Struktur in Verformungsenergie oder dergleichen umgewandelt und gleichzeitig durch die Ableitung des auffahrenden Pkw's die ungleiche Masse- und Energieverteilung zwischen den beiden Fahrzeugen, solange das Nfz noch in Bewegung ist, kompensiert und die Gefahr des Überrollens des Pkw's deutlich verringert.

Die Aufprallvorrichtung des Systems kann dabei entweder die Stoßstange selber, eine darunter angeordnete Vorrichtung, wie z. B. ein Frontspoiler, oder unter Umständen beide Komponenten gleichzeitig sein.

In einer fertigungstechnisch einfachen Ausführung ist die als Aufprallvorrichtung dienende Komponente gewölbt, d.h. im Längsschnitt bogenartig ausgeführt, was allerdings zur Vergrößerung der Gesamtlänge des Fahrzeugs führt.

Gemäß einer weiteren Ausgestaltung der Erfindung wird der Frontspoiler bzw. die Stoßstange so in ein Gesamtsystem eingebunden, daß diese Komponenten mit Hilfe eines geeigneten Abstandsmeßsystems vor einem Zusammenprall in eine Stellung ausgefahren werden, in der eine Ableitung des auffahrenden Pkw's möglich ist. Mit dieser Lösung wird einerseits die Gesamtlänge des Nfz im Normalfall beibehalten und trotzdem werden im Falle eines Aufpralles die Verformungswege vergrößert und gleichzeitig ein Ableiten ermöglicht.

Die Erfindung ist nachfolgend anhand der Zeichnung näher erläutert. In der Zeichnung zeigen in schematischer Darstellung:
- Fig. 1: die vorderen Enden eines Nfz und eines Pkw's in Seitenansicht, um die Verhältnisse bei einem Frontalzusammenstoß erläutern zu können,
- Fig. 2: die Draufsicht auf den Bereich eines möglicherweise bevorstehenden Frontalzusammenstoßes zwischen Nfz und Pkw,
- Fig. 3 bis 8: je eine Ausgestaltung einer Aufprallvorrichtung.

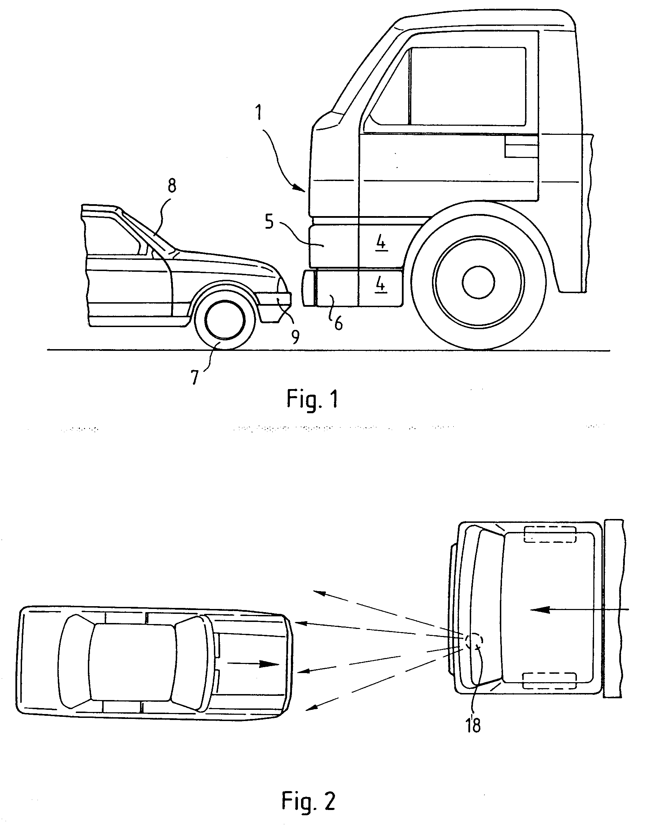

Der vordere Teil eines Nfz ist gemäß Fig. 1 gekennzeichnet durch den unteren Fahrerhausbereich 1, das Vorderrad 2, den Kotflügel 3, die Rahmenkonstruktion 4, die Stoßstange 5 sowie eines unterhalb der Stoßstange 5 angebrachten Frontspoilers 6. Von einem Pkw ist ein Vorderrad 7, der vordere Teil der Karosserie 8 und eine in die Karosserie 8 integrierte Stoßstange 9 dargestellt.

Ersichtlich liegt die Stoßstange 5 des Nfz erheblich oberhalb der Stoßstange 9 des Pkw's, so daß bei einem Frontalzusammenstoß beide Stoßstangen 5 bzw. 9 nicht zusammenwirken. Hat der Frontspoiler 6 des Nfz nur Windleitfunktion, wie es allgemein üblich ist, so ist es ein relativ leichtes Gebilde, das kaum Aufprallenergie aufzunehmen vermag. Der Pkw wird also bei einem Auffahrunfall vom Frontspoiler 6 kaum behindert, unter das Nfz zu gelangen, vorzugsweise bis er am vorderen Ende der Rahmenkonstruktion 4 anstößt und dort mehr oder weniger deformiert wird. Die Stoßstange 5 des Nfz tritt kaum in Aktion, da sie vor allem die Karosserie 8 des eindringenden Pkw's zusammendrückt, wodurch ebenfalls nur wenig Energie verzehrt wird. Dadurch wird die Energie erst von der Fahrgastzelle aufgenommen, die sich dabei verformt und keinen ausreichenden Überlebensraum für die Insassen mehr hat.

Es ist zwar bekannt, den Frontspoiler 6 mit einer energieaufnehmenden Struktur auszubilden, wodurch ein größerer Anteil der Bewegungsenergie aufgenommen werden kann, aber es bleibt das ungleiche Massenverhältnis zwischen den beiden Fahrzeugen, wobei der Pkw vom Nfz, der wegen seines hohen Gewichts praktisch unverzögert weiterfährt, entgegen seiner Fahrtrichtung geschoben bzw. zum Teil überfahren wird.

Zur Abhilfe wird zusätzlich zur energieaufnehmenden Ausgestaltung die Aufprallvorrichtung für das Nfz so ausgebildet, daß der auffahrende Pkw vom Nfz weggeleitet wird und die Fortbewegung des Nfz keinen weiteren Schaden verursacht.

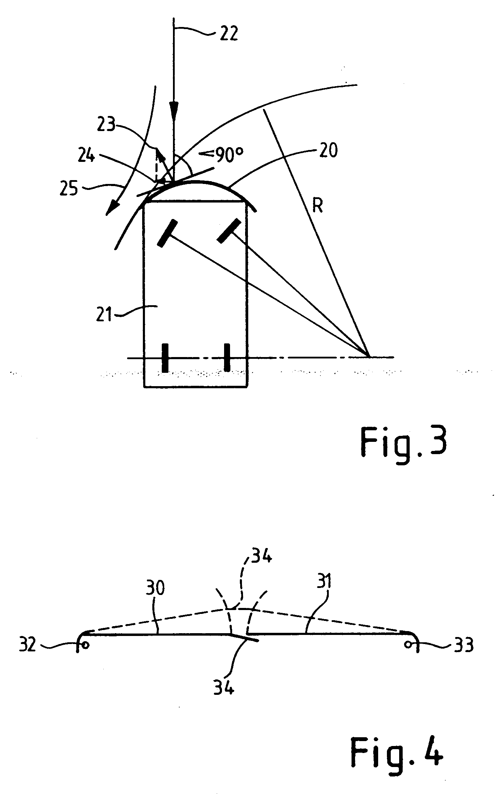

Ausführungen für derartige Aufprallvorrichtungssysteme sind in den Fig. 3 bis 8 gezeigt.

Das Ausführungsbeispiel nach Fig. 3 stellt eine technisch einfache Lösung dar, bei der die Aufprallvorrichtung, d. h. der Frontspoiler oder die Stoßstange 20 nach vorne gewölbt ist. Sie kann dabei im Längsschnitt einen Kreisbogen bilden, dessen Radius so gewählt ist, daß die Aufprallvorrichtung 20 den Wendekreis R des Fahrzeugs 21 nicht vergrößert, d. h., daß die Kontur der Komponente 20 innerhalb des Wendekreisradius R liegt. Das auffahrende Fahrzeug wird dabei auf eine schräg zu seiner Fahrtrichtung 22 stehende Fläche auftreffen und entsprechend (Pfeilrichtung 25) abgelenkt.

Bei der Lösung nach Fig. 3 wird die Gesamtlänge des Fahrzeugs 21 durch die Wölbung der Aufprallvorrichtung 20 verlängert, so daß diese Lösung für Fahrzeuge geeignet ist, deren Gesamtlänge unterhalb der maximal zulässigen Fahrzeuglänge liegt.

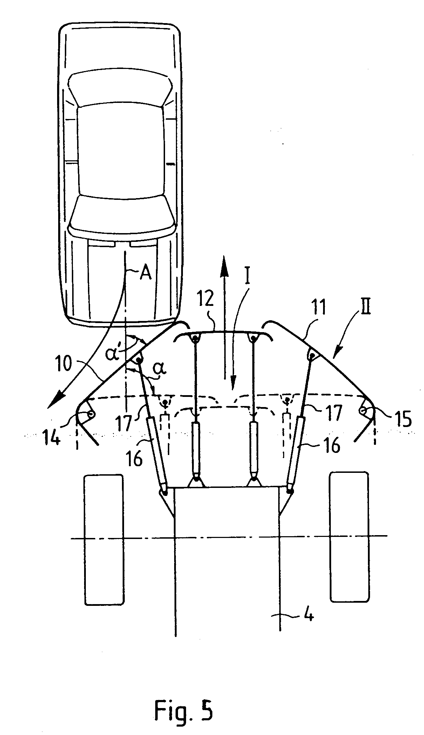

Fig. 4 und 5 zeigen Ausführungen, die auch für Fahrzeuge verwendet werden können, die mit konventioneller Stoßstange bereits die Längengrenze erreichen. Diese Ausführungen bestehen im wesentlichen darin, daß die ableitenden Komponenten des Aufprallvorrichtungssystems im normalen Fahrbetrieb die Position einer konventionellen Stoßstange einnehmen und erst bei Auffahrgefahr nach vorne, die Fahrzeuglänge vergrößernd, verschoben werden derart, daß sie durch eine entsprechende Stellung der ausgefahrenen Komponenten eine Ableitung des Pkw's ermöglichen. Hierfür ist eine Steuerung notwendig, die ein frontal anfahrendes Fahrzeug signalisieren und einen Verschiebemechanismus aktivieren kann. Eine derartige Situation ist beispielsweise in Fig. 2 dargestellt, bei der ein Meß- und Abstandssensor 18, z. B. ein bekanntes Radar- oder Lasersystem des Nfz 1 den herannahenden Pkw 8 signalisiert und in Abhängigkeit von der Annäherungsgeschwindigkeit, dem Abstand zwischen Pkw und Nfz und des gewünschten Beobachtungssektors einen Steuermechanismus des Aufprallvorrichtungsystems aktiviert, um damit die Ablenkkomponenten auszufahren. Dieses geschieht kurz vor dem Aufprall und wird beim Erreichen empirisch oder rechnerisch vorbestimmter Kriterien der Sensorsignale automatisch durchgeführt.

Die Aufprallvorrichtung kann zweiteilig ausgebildet werden, wie es in Fig. 4 dargestellt ist. Im Normalbetrieb liegen die beiden Komponententeile 30 und 31, die beispielsweise jeweils seitlich am Wagen angelenkt 32, 33 sind, mit dem jeweils freien Ende an der Fahrzeugfront an, diese Stellung ist in Fig. 4 mit durchgehendem Strich dargestellt. Vor einem Aufprall werden beide Komponententeile 30 und 31 nach vorne ausgeschwenkt, so daß sie eine gewölbte Stoßfläche bilden (gestrichelte Stellung). Um einen Spalt zwischen den beiden freien Enden der Komponenten 30 und 31 in vorgeschobener Stellung zu vermeiden, ist die eine Komponente 30 mit einem zum Fahrzeug hin gebogenen und in Normalstellung hinter die zweite Komponente 31 ragenden Abschnitt 34 versehen, der die sich sonst ergebende Lücke in ausgefahrener Stellung schließt. Die Ausfahrkomponenten 30 und 31 können im Längsschnitt geradlinig oder leicht gewölbt sein.

Der mit der einen Komponente 30 verbundene Abschnitt 34 kann aber auch, wie in Fig. 5 dargestellt ist, getrennt ausgebildet und ausgefahren werden. In Fig. 5 ist es die Ausfahrkomponente 12. Die seitlichen Komponenten 10 und 11 sind nahe ihrem jeweiligen äußeren Ende um ein Gelenk 14 bzw. 15 mit vertikaler Achse schwenkbar und energieaufnehmend an der Rahmenkonstruktion 4 gelagert. Insoweit entspricht diese Ausführung der in Fig. 4 gezeigten Ausführungsform. Die dritte und mittlere Komponente 12 ist als ein translatorisch in Fahrzeuglängsrichtung verstellbarer Schlitten ausgebildet. Das Aufprallsystem nimmt gemäß Fig. 5 normal die gestrichelt dargestellte Betriebsstellung I ein. Die Verstellbewegung in die Stellung II wird vor dem Aufprall durch das vorstehend erwähnte Meß- und Abstandsregelsystem bewirkt.

Auch hier können die Ableitkomponenten im Längsschnitt gerade oder gewölbt ausgebildet werden. Für das Auffahren der Ablenkkomponenten 10, 11, 12 eignen sich hydraulische oder pneumatische Verstellmechanismen 16, wie sie beispielsweise in Fig. 5 gezeigt sind. Jede Ableitkomponente ist gegen Aufprallkräfte ausreichend widerstandsfähig ausgebildet, wobei aber das Aufprallsystem zur Aufnahme von kinetischer Energie verformbar ausgelegt sein muß, beispielsweise mit Sandwich- oder Gerippestrukturen. Aufprallsysteme mit ausfahrbaren Komponenten haben darüber hinaus den Vorteil, daß der Verformungsweg vergrößert wird, wodurch ein weiterer Beitrag zur Milderung von Aufprallfolgen geschaffen ist.

Nach einer besonders vorteilhaften Ausgestaltung der Erfindung wird, ohne das Fahrzeug im Normalbetrieb verlängern zu müssen, der Verformungsweg der Aufprallvorrichtung für einen Frontalaufprall verlängert, so daß damit das Risiko des Ineinanderschiebens beider Fahrzeuge verringert wird. Dabei wird das Nfz außerdem einen höheren Anteil an der Energieaufnahme übernehmen, als es bei den herkömmlichen Stoßfängern der Fall ist.

Der ausfahrbare Teil der Aufprallvorrichtung kann dabei entweder die Stoßstange selber, eine darunter angeordnete Vorrichtung, wie z. B. ein Frontspoiler, oder unter Umständen beide Komponenten gleichzeitig oder Teile davon sein. Die Verschiebung wird je nach Ausgestaltung des Fahrzeugfrontteiles eine Parallel- oder Schrägverschiebung oder auch eine Schwenkbewegung sein.

Der Ausfahrvorgang kann gemäß einer Ausgestaltung der Erfindung schlagartig durchgeführt werden. Hierzu eignen sich hochgespannte Gasreservoirs, Air-bags, wie sie beispielsweise zum Schutz von Fahrgästen bereits bekannt sind, Feder- oder andere Energiespeichersysteme, bei denen eine Schubkraft spontan ausgelöst werden kann.

Zur Einleitung des Ausfahrvorganges eignet sich ein Meß-und Abstandssensor mit zugehörigem Steuersystem, mit dem ein Pkw vor dem Aufprall signalisiert und ein Steuersignal für den Ausfahrvorgang rechtzeitig vor dem Aufprall abgegeben wird. Als Sensor kann vorzugsweise auch ein Nebelsichtsensor verwendet werden, mit dem ein Fahrzeug bereits ausgerüstet sein kann. Mit einem derartigen Sensor wird der Mindestabstand zum vorderen Fahrzeug in Abhängigkeit der Sichtweite bei Nebel beobachtet bzw. durch Bremsvorgang zum Einhalten des Mindestabstands gebracht. Durch Einprogrammieren einer weiteren Steuercharakteristik kann das Nebelschutzsystem gleichzeitig zur Betätigung der Ausfahrvorrichtung genutzt werden.

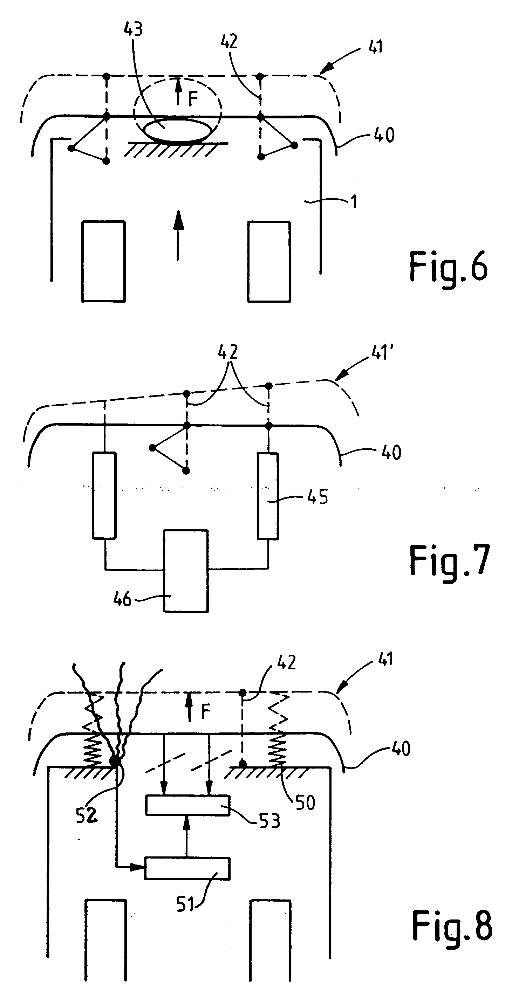

Die Fig. 6 bis 8 zeigen schematisch Aufpralleinrichtungen, in denen die kinetische Energie bei einem etwaigen Zusammenstoß vernichtet wird. Am Fahrzeug 1 ist eine als Aufprallvorrichtung dienende Stoßstange oder Spoiler 40 in der für Nfz üblichen Position angeordnet, jedoch so befestigt, daß der Stoßfänger 40 beim Einwirken einer nach vorne gerichteten Kraft F ausgefahren werden kann. In ausgefahrener Stellung 41 des Stoßfängers ist dieser ebenfalls mit einer energieaufnehmenden Struktur verbunden, die in der Zeichnung mit auslenkbaren Stangen 42 symbolisiert ist.

Zum Ausfahren der Aufprallvorrichtung 41, 42 ist nach Fig. 6 ein sogenannter Air-bag 43 vorgesehen, der hinter dem Stoßfänger 40 an der Rahmenkonstruktion des Fahrzeugs befestigt ist und der bei Bedarf sich explosionsartig aufweitet und damit den Stoßfänger 40 nach vorne in die Stellung 41 schiebt. Damit wird der Verformungsweg am Nfz nach vorne verlängert, so daß die Energieverzehrung bereits in einem größerem Abstand zwischen dem Pkw und der Rahmenkonstruktion 4 beginnt.

Anstelle des Air-bags 43 kann ein pneumatisches oder hydraulisches System verwendet werden, das gemäß Fig. 7 aus Druckkolben 45 bestehen kann, die mit einem hochgespannten Gasreservoir 46 aktivierbar sind. Bei Ausbildung von in sich verformbaren Druckkolben 45 übernehmen diese gleichzeitig zumindest einen Teil der Energieaufnahme.

Fig. 8 zeigt eine Ausführung, bei der die Ausfahrkraft F durch ein vorgespanntes Federsystem 50 ausgeübt wird.

Die vorstehend beschriebenen Ausführungen schließen ein System ein, mit dem potentielle Energie gespeichert wird, die dann explosionsartig in Bewegungsenergie umsetzbar ist. Zur Betätigung des Ausfahrvorganges ist eine in Fig. 8 angedeutete Steuerung 51 vorgesehen, die in Abhängigkeit der Meßsignale eines Meß- und Abstandssensors 52 ein Stellglied 53 zur Einleitung der Ausfahrbewegung, z. B. durch eine Entriegelung, aktiviert.

Es lassen sich aber auch nicht explosionsartig arbeitende Vorschubeinrichtungen verwenden, die nach konventionellen Vorschubmechanismen ausgestaltet sind. Eine derartige Einrichtung kann beispielsweise die in Fig. 7 gezeigten Druckzylinder 45 in Verbindung mit einer nicht dargestellten Pumpe beinhalten.

In Fig. 6 und 8 sind Parallelverschiebungen der gesamten Komponente 40 (41) und in Fig. 7 eine kombinierte Schwenkverschiebungsbewegung 40 (41′) dargestellt. Die Ausführung für die Verlängerung des Verformungsweges kann aber jede Form annehmen. Die zu bewegende Komponente kann, abgesehen von der gesamten Stoßstange oder des gesamten Spoilers, ein Teil davon sein. Eine andere Möglichkeit ist, daß die Komponente in getrennt bewegliche Teile aufgetrennt wird, wobei die einzelnen Teile in gleicher oder unterschiedlicher Weise bewegt werden. Ein Beispiel hierzu ist die Aufteilung der Komponente in zwei Seitenteile, die schwenkbar gelagert sind und ein Mittelteil, das parallel zu sich nach vorne verschiebbar angeordnet ist.

## Patentansprüche

1. Aufprallvorrichtungssystem an Nutzfahrzeugen mit einer energieaufnehmenden Einrichtung in der Stoßstangenebene von Personenkraftwagen, dadurch gekennzeichnet, daß unterhalb der Nutzfahrzeug-Stoßstange (5), in der Ebene von Pkw-Stoßstangen eine Vorrichtung (10 bis 12; 20; 30, 31, 40) zur seitlichen Ableitung von auffahrenden Personenkraftwagen angeordnet ist.

2. Vorrichtung nach Anspruch 1, dadurch gekennzeichnet, daß die Vorrichtung (20) zumindest teilweise in Fahrzeuglängsrichtung nach vorne gewölbt ist.

3. Vorrichtung nach Anspruch 1 oder 2, dadurch gekennzeichnet, daß die Vorrichtung (10 bis 12 bzw. 30, 31) in Fahrzeuglängsrichtung nach vorne ausfahrbar oder ausschwenkbar ausgestaltet ist und daß das Aufprallsystem in dieser Lage energieaufnehmend ist.

4. Vorrichtung nach Anspruch 1, dadurch gekennzeichnet, daß die Vorrichtung (10 bis 12 bzw. 30, 31) so in einem Gesamtsystem eingebunden ist, daß seine Komponenten mit Hilfe eines geeigneten Abstandmeßsystems (18) vor einem Zusammenprall automatisch ausfahrbar sind.

5. Vorrichtung nach Anspruch 3 oder 4, dadurch gekennzeichnet, daß die Vorrichtung aus zwei seitlichen Komponenten (30, 31) besteht, die in Normalstellung, annähernd quer zur Fahrzeuglängsachse stehend, eine durchgehende Struktur bilden und die im ausgefahrenen Zustand einen Winkel zueinander bilden.

6. Vorrichtung nach Anspruch 3 oder 4, dadurch gekennzeichnet, daß die Vorrichtung aus zwei seitlichen und einer mittleren Komponente (10, 11 bzw. 12) besteht, die im Normalbetrieb annähernd in einer Ebene senkrecht zur Fahrzeuglängsachse liegt, daß die beiden seitlichen Komponenten (10 und 11) in ausgefahrener Stellung einen Winkel zueinander bilden und daß die mittlere Komponente (12) parallel zu sich selbst vorschiebbar ist.

7. Vorrichtung nach Anspruch 6, dadurch gekennzeichnet, daß die seitlichen Komponenten (10, 11) in den Bereichen ihrer einander abgekehrten Enden um je eine vertikale Achse (14, 15) gegenüber dem Fahrzeugrahmen (4) schwenkbar gelagert sind, und daß die Gelenke energieaufnehmend ausgebildet sind.

8. Vorrichtung nach Anspruch 6, dadurch gekennzeichnet, daß die mittlere Komponente (12) in dem Bereich zwischen den einander zugekehrten Enden der seitlichen Komponenten (10, 11) translatorisch verstellbar ausgebildetist.

9. Vorrichtung nach den Ansprüchen 4 bis 7, dadurch gekennzeichnet, daß die von dem Signal (18) ausgelöste Verstellkraft die einander zugekehrten Enden der seitlichen Komponenten (10, 11 bzw. 30, 31) vom Fahrzeug aus nach vorne verstellt.

10. Vorrichtung nach einem der vorhergehenden Ansprüche, dadurch gekennzeichnet, daß für die Verstellung der Komponenten (10 bis 12 bzw. 30, 31) Kolbenzylinderbaugruppen (16, 17) vorgesehen sind, die am Fahrzeugrahmen energieaufnehmend gelagert und in sich verformbar sind.

11. Vorrichtung nach einem oder mehreren der Ansprüche 1 bis 10, dadurch gekennzeichnet, daß unterhalb der Nutzfahrzeug-Stoßstange (5), in der Ebene von Pkw-Stoßstangen eine Vorrichtung (40) angeordnet ist, die zumindest teilweise zur Verlängerung des Verformungsweges in Richtung der Fahrzeugachse nach vorne ausfahrbar und/oder schwenkbar ausgestaltet ist.

12. Vorrichtung nach Anspruch 11, dadurch gekennzeichnet, daß für den Ausfahrvorgang eine hydraulische oder pneumatische Verstellvorrichtung (45) vorgesehen ist.

13. Vorrichtung nach Anspruch 12, dadurch gekennzeichnet, daß die Verstellvorrichtung (45) mit einem Energiespeicher (46), insbesondere einem hochgespannten Gasreservoir in Verbindung steht.

14. Vorrichtung nach Anspruch 11, dadurch gekennzeichnet, daß zum Auslösen des Ausfahrvorganges ein sogenannter Air-bag (43) vorgesehen ist.

15. Vorrichtung nach Anspruch 11, dadurch gekennzeichnet, daß zum Auslösen des Ausfahrvorganges vorgespannte Federsysteme (50) vorgesehen sind.

16. Vorrichtung nach einem der Ansprüche 11 bis 15, dadurch gekennzeichnet, daß der Ausfahrvorgang mittels eines Meß- und Abstandssensors (52) in Verbindung mit einer Steuereinheit (51) auslösbar ist.

17. Vorrichtung nach einem der vorhergehenden Ansprüche, dadurch gekennzeichnet, daß die Aufprallvorrichtung im ausgefahrenen Zustand (41) der Vorrichtung (40) eine energieaufnehmende Struktur (42) besitzt.

18. Vorrichtung nach Anspruch 17, dadurch gekennzeichnet, daß die energieaufnehmende Struktur (42) aufklappbare Gestänge sind.

## Claims

1. A bumper system on utility vehicles with an energy-absorbing device in the bumper plane of passenger cars, characterized in that a device (10 to 12; 20; 30, 31, 40) for laterally diverting oncoming passenger cars is arranged below the bumper (5) of the utility vehicle in the plane of the bumpers of passenger cars.

2. A device according to Claim 1, characterized in that the device (20) is at least in part curved forwards in the longitudinal direction of the vehicle.

3. A device according to Claim 1 or 2, characterized in that the device (10 to 12 and 30, 31 respectively) is made so that it can be extended or swung out forwards in the longitudinal direction of the vehicle, and the bumper system is energy-absorbing in this position.

4. A device according to Claim 1, characterized in that the device (10 to 12 and 30, 31 respectively is integrated in an overall system in such a way that its components can be extended automatically with the aid of a suitable distance-measurement system (18) before a collision.

5. A device according to Claim 3 or 4, characterized in that the device comprises two lateral components (30, 31), which in the normal position, lying substantially transversely to the longitudinal axis of the vehicle, form a continuous structure and which in the extended state form an angle with respect to each other.

6. A device according to Claim 3 or 4, characterized in that the device comprises two lateral and one central component (10, 11 and 12 respectively), which in normal operation lies substantially in a plane at right angles to the longitudinal axis of the vehicle, the two lateral components (10 and 11) in the extended state form an angle with each other, and the central component (12) can be pushed forward parallel to itself.

7. A device according to Claim 6, characterized in that in the region of their ends remote from each other the lateral components (10, 11) are mounted so as to be pivotable about a respective vertical axis (14, 15) with respect to the vehicle frame (4), and the pivot joints are constructed so as to be energy-absorbing.

8. A device according to Claim 6, characterized in that in the region between the mutually facing ends of the lateral components (10, 11) the central component (12) is constructed so as to be displaceable in a translatory manner.

9. A device according to Claims 4 to 7, characterized in that the displacement force triggered by the signal (18) displaces the mutually facing ends of the lateral components (10, 11 and 30, 31 respectively) forwards out of the vehicle.

10. A device according to one of the preceding Claims, characterized in that piston-cylinder assemblies (16, 17), which are mounted in an energy-absorbing manner on the vehicle frame and are deformable per se, are provided for the displacement of the components (10 to 12 and 30, 31 respectively).

11. A device according to one or more of Claims 1 to 10, characterized in that a device (40), which is constructed so as to be extensible and/or pivotable forwards at least in part in order to prolong the deformation path in the direction of the vehicle axis, is arranged below the bumper (5) of the utility vehicle in the plane of the bumpers of passenger cars.

12. A device according to Claim 11, characterized in that an hydraulic or pneumatic displacement device (45) is provided for the extension procedure.

13. A device according to Claim 12, characterized in that the displacement device (45) is connected to an energy reservoir (46), in particular a high-pressure gas reservoir.

14. A device according to Claim 11, characterized in that a so-called air bag (43) is provided for triggering the extension.

15. A device according to Claim 11, characterized in that pre-tensioned spring systems (50) are provided for triggering the extension.

16. A device according to one of Claims 11 to 15, characterized in that the extension can be triggered by means of a measurement and distance sensor (52) in conjunction with a control unit (51).

17. A device according to one of the preceding Claims, characterized in that the bumper device has an energy-absorbing structure (42) in the extended state (41) of the device (40).

18. A device according to Claim 17, characterized in that the energy-absorbing structure (42) has hinged rods.

## Revendications

1. Dispositif anti-chocs sur véhicules utilitaires avec un dispositif d'absorption de l'énergie dans le plan du pare-chocs dos voitures particulières, dispositif anti-chocs caractérisé on ce que, en dessous du pore-chocs (5) du véhicule utilitaire, dans le plan des pare-chocs des voitures particulières est disposé un dispositif (10 à 12 ; 20 ; 30 ; 31 ; 40) servant à dévier latéralement les voitures particulières entrant en collision.

2. Dispositif selon la revendication 1, caractérisé en ce que le dispositif (20) est au moins en partie bombé vers l'avant dans la sons longitudinal du véhicule.

3. Dispositif selon les revendications 1 ou 2, caractérisé en ce que le dispositif (10 à 12 ou 30, 31) est constitué de façon à pouvoir sortir vers l'avant ou pivoter on sortant vers l'avant et en se que le système anti-chocs dans cette position absorbe de l'énergie.

4. Dispositif selon la revendication 1, caractérisé en ce que le dispositif (10 à 12 ou 30, 31) est incorporé dans un système global, de telle sorte que ses éléments peuvent être sortis à l'aide d'un système approprié de mesure de distance (18) automatiquement avant une collision.

5. Dispositif selon la revendication 3 ou 4, caractérisé en ce que le dispositif consiste en deux éléments latéraux (30, 31) qui, en position normale, se trouvent à peu près perpendiculairement à l'axe longitudinal du véhicule, forment une structure traversante et qui forment en position déployée, un certain angle l'un par rapport à l'autre.

6. Dispositif selon la revendication 3 ou 4, caractérisé en ce que le dispositif consiste en deux éléments latéraux (10, 11) et un élément central (12), qui se trouve en fonctionnement normal à peu près dans un plan perpendiculaire à l'axe longitudinal du véhicule, en ce que les deux éléments latéraux (10 et 11) forment en position déployée un certain angle l'un par rapport à l'autre et en ce que l'élément central (12) peut coulisser parallèlement à lui-même.

7. Dispositif selon la revendication 6, caractérisé en ce que les éléments latéraux (10, 11) dans les zones de leurs extrémités tournées à l'opposé l'une de l'outre sont montés de façon à pouvoir pivoter chacun autour d'un axe vertical (14, 15) par rapport au châssis du véhicule (4) et on ce que les articulations sont constituées de façon à absorber l'énergie.

8. Dispositif selon la revendication 6, caractérisé en ce que l'élément central (12) est constitué dans la zone entre les extrémités tournées l'une vers l'autre des éléments latéraux (10, 11) sont constitués de façon à pouvoir être réglés par translation.

9. Dispositif selon les revendication 4 à 7, caractérisé en ce que la force de déplacement libérée par le signal (18) déplace vers l'avant les extrémités tournées l'une vers l'autre des éléments latéraux (10, 11 ou 30, 31) au véhicule,

10. Dispositif selon l'une des revendications précédentes, caractérisé en ce que pour le déplacement des éléments (10 à 12 ou 30, 31), il est prévu des groupes de vérins (16, 17), qui sont montée sur le châssis du véhicule et absorbant de l'énergie et peuvent être en soi déformés.

11. Dispositif selon une ou plusieurs des revendications 1 à 10, caractérisé en ce qu'un dessous du pare-chocs (5) du véhicule utilitaire est disposé dans le plan des pare-chocs des voitures particulières un dispositif (40), qui au moins partiellement est réalisé de façon à pouvoir se déployer et ou pivoter vers l'avant pour allonger le trajet de déformation dans le sens de l'axe du véhicule.

12. Dispositif selon la revendication 11, caractérisé en ce que pour le processus de déploiement, on prévoit un dispositif de déplacement hydraulique ou pneumatique (45).

13. Dispositif selon la revendication 12, caractérisé en ce que le dispositif de déplacement (45) est en liaison avec un réservoir d'énergie (46), en particulier un réservoir de gaz sous haute pression.

14. Dispositif selon la revendication 11, caractérisé en ce qu'il est prévu ce qu'on appelle un coussin d'air (43) pour déclencher le processus de déplacement.

15. Dispositif selon la revendication 11, caractérisé en ce que des systèmes à ressort précontraints (50) sont prévus pour déclencher le processus de déplacement.

16. Dispositif selon l'une des revendications 11 à 15, caractérisé en ce que le processus de déplacement peut être déclenché au moyen d'un capteur de mesure et de distance (52) en liaison avec une unité de commande (51).

17. Dispositif selon l'une des revendication précédentes, caractérisé en ce que le dispositif anti-chocs possède quand le dispositif (40) est en position déployée (41) une structure qui absorbe l'énergie.

18. Dispositif selon la revendication 17, caractérisé en ce que la structure qui absorbe l'énergie (42) est constituée par des tiges déployables.
